# EUROPÄISCHE PATENTANMELDUNG

(11) **EP 3 454 149 A1**
(43) Veröffentlichungstag der Anmeldung: **13.03.2019**
(21) Anmeldenummer: 17190317.2
(22) Anmeldetag: 11.09.2017
(51) Int. Cl.: G05B 19/4155

(54) **OPTIMIERTE ZUORDNUNG VON PROZESSSIGNALEN ZU KONTUREN EINES WERKSTÜCKS**

(71) Anmelder: Siemens Aktiengesellschaft, 80333 München (DE)
(72) Erfinder: Köpken, Hans-Georg, 91056 Erlangen (DE); Reichel, Theo, 91301 Forchheim (DE)

(57) **Zusammenfassung**

Durch eine konturverändernde Bearbeitung eines Werkstücks (2) durch ein Werkzeug (1) wird das Werkstück (2) von einer Anfangskontur (KA) in eine Endkontur (KE) überführt. Aufgrund der Bearbeitung tritt eine resultierende Prozessgröße (Pi) auf. Für Bearbeitungszeitpunkte (ti) während der Bearbeitung des Werkstücks (2) werden jeweils eine aufgrund der Bearbeitung des Werkstücks (2) durch das Werkzeug (1) zu dem jeweiligen Bearbeitungszeitpunkt (ti) resultierende jeweilige Prozessgröße (Pi) und ein jeweiliger Einwirkungsbereich (Ei) des Werkstücks (2) ermittelt. Der jeweilige Einwirkungsbereich (Ei) korrespondiert mit einer zum jeweiligen Bearbeitungszeitpunkt (ti) durch das Werkzeug (1) bewirkten Konturveränderung des Werkstücks (2). Zumindest ausgewählten der Einwirkungsbereiche (Ei) wird die für den jeweiligen Bearbeitungszeitpunkt (ti) ermittelte jeweilige resultierende Prozessgröße (Pi) zugeordnet. Die ausgewählten Einwirkungsbereiche (1) sind derart bestimmt, dass sie mit der Anfangskontur (KA), der Endkontur (KE) und/oder mit mindestens einer der Konturen (K) des Werkstücks (2) während der Bearbeitung übereinstimmen.

## Beschreibung

Die vorliegende Erfindung geht aus von einem Ermittlungsverfahren für eine örtliche Verteilung mindestens einer resultierenden Prozessgröße, die aufgrund einer durch eine Steuereinrichtung einer Werkzeugmaschine gesteuerten konturverändernden Bearbeitung eines Werkstücks durch ein Werkzeug auftritt, durch die das Werkstück von einer zu Beginn der konturverändernden Bearbeitung vorliegenden Anfangskontur des Werkstücks in eine am Ende der Bearbeitung vorliegende Endkontur überführt wird,
- wobei für Bearbeitungszeitpunkte während der Bearbeitung des Werkstücks durch das Werkzeug jeweils die zu einem jeweiligen Bearbeitungszeitpunkt aufgrund der Bearbeitung resultierende jeweilige Prozessgröße ermittelt wird.

Die vorliegende Erfindung geht weiterhin aus von einem Computerprogramm, das Maschinencode umfasst, der von einer einer Steuereinrichtung einer Werkzeugmaschine zugeordneten Recheneinrichtung unmittelbar abarbeitbar ist, wobei die Abarbeitung des Maschinencodes durch die Recheneinrichtung bewirkt, dass die Recheneinrichtung ein derartiges Ermittlungsverfahren ausführt.

Die vorliegende Erfindung geht weiterhin aus von einer einer Steuereinrichtung einer Werkzeugmaschine zugeordneten Recheneinrichtung, wobei die Recheneinrichtung mit einem derartigen Computerprogramm programmiert ist, so dass sie im Betrieb ein derartiges Ermittlungsverfahren ausführt.

Bei der konturverändernden Bearbeitung von Werkstücken - insbesondere der konturabtragenden Bearbeitung von Werkstücken, beispielsweise der spanenden Bearbeitung - sollen oftmals Prozessgrößen wie beispielsweise das von einem Fräskopf aufgebrachte Drehmoment erfasst und zur Erkennung von Prozessabweichungen genutzt werden. Derartige Prozessabweichungen können beispielsweise zur Erkennung von Fehlern und Störungen im Werkstück genutzt werden. Für eine entsprechende Auswertung ist eine Zuordnung der Prozessgrößen zum Werkstück - genauer: zum jeweiligen Bearbeitungsort - erforderlich.

Zur Bearbeitung des Werkstücks durch das Werkzeug wird das Werkzeug - sowohl im Stand der Technik als auch im Rahmen der vorliegenden Erfindung - relativ zum Werkstück entlang einer vorbestimmten Bahn bewegt. Für jeden Bearbeitungszeitpunkt während der Bearbeitung des Werkstücks durch das Werkzeug existiert dadurch ein jeweiliger Einwirkungsbereich des Werkstücks, der mit einer zum jeweiligen Bearbeitungszeitpunkt durch das Werkzeug bewirkten Konturveränderung des Werkstücks korrespondiert. Es ist bekannt, für die Bearbeitungszeitpunkte auch jeweils einen zu dem jeweiligen Bearbeitungszeitpunkt gegebenen sogenannten tool center point (TCP) zu ermitteln und die jeweilige resultierende Prozessgröße dem TCP zuzuordnen. Durch diese Vorgehensweise kann eine Abfolge von Punkten generiert werden, denen jeweils eine jeweilige resultierende Prozessgröße zugeordnet ist. Die Abfolge von Punkten ergibt einen Linienzug.

Wenn - beispielsweise aufgrund einer geringen Größe des Werkzeugs - der Einwirkungsbereich für jeden Bearbeitungszeitpunkt in der Nähe des TCP liegt, kann durch die bekannte Vorgehensweise eine Kontur ermittelt werden, die mit der Kontur des fertigen Werkstücks in guter Näherung übereinstimmt. Insbesondere liegen die Linien des Linienzuges und aufeinanderfolgende Punkte des Linienzuges nahe beieinander. Weiterhin sind in diesem Fall auch die Abstände zwischen dem jeweiligen TCP und dem jeweiligen Einwirkungsbereich nur gering. In derartigen Fällen ist eine sehr anschauliche Zuordnung der resultierenden Prozesssignale zum entsprechenden Orten auf dem Werkstück möglich.

In vielen Fällen weist das Werkzeug jedoch einen relativ großen Bereich auf, über den das Werkzeug auf das Werkstück einwirken kann. Weiterhin befindet sich nicht stets derselbe Abschnitt des genannten Bereiches im Eingriff mit dem Werkstück. In derartigen Fällen ergeben sich deutliche Abweichungen zwischen der tatsächlichen Kontur des fertigen Werkstücks und der fiktiven Kontur des fertigen Werkstücks, wie sie durch den Linienzug bzw. die Punkte des Linienzuges repräsentiert wird. In derartigen Fällen ist die bekannte Vorgehensweise nicht zielführend. Insbesondere ergibt sich kein intuitiver Bezug zwischen bestimmten Stellen der tatsächlichen Kontur des Werkstücks und bestimmten Stellen der fiktiven Kontur des fertigen Werkstücks. Beispiele von Werkzeugen, bei denen dieser Effekt besonders stark auftritt, sind lange Fingerfräser und Messerköpfe mit großem Durchmesser.

Die Aufgabe der vorliegenden Erfindung besteht darin, Möglichkeiten zu schaffen, mittels derer unabhängig von der Art des Werkzeugs stets eine korrekte örtliche Zuordnung der resultierenden Prozesssignale möglich ist, welche eine einfache und intuitive Auswertung ermöglicht.

Die Aufgabe wird durch ein Ermittlungsverfahren mit den Merkmalen des Anspruchs 1 gelöst. Vorteilhafte Ausgestaltungen des Ermittlungsverfahrens sind Gegenstand der abhängigen Ansprüche 2 bis 14.

Erfindungsgemäß wird ein Ermittlungsverfahren der eingangs genannten Art dadurch ausgestaltet,
- dass für die Bearbeitungszeitpunkte auch ein zu dem jeweiligen Bearbeitungszeitpunkt aufgrund der Bearbeitung gegebener jeweiliger Einwirkungsbereich des Werkstücks ermittelt wird,
- dass zumindest ausgewählten der Einwirkungsbereiche die für den jeweiligen Bearbeitungszeitpunkt ermittelte jeweilige resultierende Prozessgröße zugeordnet wird, und
- dass die ausgewählten Einwirkungsbereiche derart bestimmt sind, dass sie mit der Anfangskontur des Werkstücks und/ oder mit der Endkontur des Werkstücks und/oder mit mindestens einer der Konturen des Werkstücks, in denen das Werkstück während der Bearbeitung vorliegt, übereinstimmen.

Dadurch wird die jeweilige resultierende Prozessgröße nicht einem einzelnen Punkt (nämlich dem TCP) zugeordnet, dessen räumliche Beziehung zum jeweiligen Einwirkungsbereich darüber hinaus variieren kann, sondern dem Einwirkungsbereich selbst. Somit ist stets und in jedem Fall gewährleistet, dass die resultierende Prozessgröße demjenigen Volumenbereich des Werkstücks zugeordnet wird, der der Konturänderung während des jeweiligen Bearbeitungszeitpunkts entspricht.

In Einzelfällen ist es möglich, dass die konturverändernde Bearbeitung eine materialauftragende Bearbeitung ist. In der Regel ist die konturverändernde Bearbeitung jedoch eine materialabtragende Bearbeitung, insbesondere eine spanende Bearbeitung.

Im Rahmen einer materialabtragenden Bearbeitung kann die resultierende Prozessgröße insbesondere eine Drehzahl des Werkzeugs, ein Drehmoment des Werkzeugs, eine Vorschubgeschwindigkeit des Werkzeugs relativ zum Werkstück, eine Vorschubkraft oder eine aus mindestens einer dieser Größen abgeleitete Zwischengröße sein. Ein Beispiel einer derartigen abgeleiteten Zwischengröße ist das Produkt aus Drehzahl und Drehmoment, dividiert durch die Vorschubgeschwindigkeit. Die Vorschubkraft kann beispielsweise aus dem Strom des Vorschubmotors, gegebenenfalls unter Berücksichtigung der Kinematik, ermittelt werden.

Die dem jeweiligen Einwirkungsbereich zugeordnete resultierende Prozessgröße kann alternativ eine Sollgröße, eine erfasste Istgröße oder eine aus mindestens einer derartigen Größe abgeleitete Zwischengröße sein. Im Falle der Ableitung der Zwischengröße aus mehreren anderen Größen sind die anderen Größen vorzugsweise gleichartiger Natur, d.h. entweder nur Sollgrößen oder nur Istgrößen, nicht aber gemischt Sollgrößen und Istgrößen.

Im Falle einer Istgröße bzw. von mehreren Istgrößen müssen selbstverständlich während der Bearbeitung des Werkstücks durch das Werkzeug die auftretenden Istgrößen sensorisch erfasst werden. Entsprechende Sensoren sind dem Fachmann ohne weiteres bekannt. Beispielsweise können die Drehzahl und die Stromaufnahme eines Antriebs, mittels dessen das Werkzeug rotiert wird, erfasst werden. Über eine Getriebeübersetzung kann die Drehzahl des Antriebs in eine Drehzahl des Werkzeugs umgerechnet werden. In analoger Weise kann aus der Stromaufnahme des Antriebs das Drehmoment des Antriebs und in Verbindung mit der Getriebeübersetzung das Drehmoment des Werkzeugs ermittelt werden.

Vorzugsweise erfolgt zur zeitlichen Glättung vor der Zuordnung der jeweiligen resultierenden Prozessgröße zum jeweiligen Einwirkungsbereich eine zeitliche Filterung der Sollgröße oder der erfassten Istgröße. Die resultierende Prozessgröße wird in diesem Fall anhand der gefilterten Größen ermittelt. Alternativ ist es möglich, dass anhand mehrerer Sollgrößen und/oder Istgrößen eine Zwischengröße ermittelt wird und die Zwischengröße zeitlich gefiltert wird. In diesem Fall korrespondiert die resultierende Prozessgröße mit der gefilterten Zwischengröße. In beiden Fällen können dadurch kurzzeitige Schwankungen, die das Bild nur verzerren würden, ausgefiltert werden. Die Filterung kann nach Bedarf eine Tiefpassfilterung, eine Bandpassfilterung, eine Hochpassfilterung oder eine andere Filterung sein.

Die jeweilige resultierende Prozessgröße kann dem jeweiligen Einwirkungsbereich direkt zugeordnet werden. Alternativ kann die jeweilige resultierende Prozessgröße dem jeweiligen Einwirkungsbereich indirekt über eine Verzeigerung zugeordnet werden. Beispielsweise können die jeweiligen resultierenden Prozessgrößen und/oder den resultierenden Prozessgrößen zugrunde liegende Größen unter Zuordnung zum jeweiligen Bearbeitungszeitpunkt als zeitliche Folge abgespeichert werden. In diesem Fall kann die Verzeigerung dem jeweiligen Einwirkungsbereich durch Zuordnung des entsprechenden Bearbeitungszeitpunkts zugeordnet werden.

In vielen Fällen sind die ausgewählten Einwirkungsbereiche derart bestimmt, dass sie in ihrer Gesamtheit mit den jeweiligen Konturen des Werkstücks übereinstimmen, wie sie zu mehreren zwischen dem Beginn der Bearbeitung und dem Ende der Bearbeitung liegenden Bearbeitungszeitpunkten vorliegen. In einem derartigen Fall ist den ausgewählten Einwirkungsbereichen vorzugsweise zusätzlich zur jeweiligen resultierenden Prozessgröße der jeweilige Bearbeitungszeitpunkt zugeordnet, also der jeweilige Zeitpunkt, während dessen das Werkzeug auf den entsprechenden Einwirkungsbereich einwirkt. Dadurch ist es möglich, durch Vorgabe eines entsprechenden Bearbeitungszeitpunkts die zum jeweiligen Bearbeitungszeitpunkt gegebene Kontur des Werkstücks zu ermitteln und die entsprechende Kontur mit Zuordnung der entsprechenden resultierenden Prozessgrößen auszugeben. Das Ausgeben kann insbesondere als dreidimensionale Visualisierung mit einer entsprechend codierten Darstellung der resultierenden Prozessgrößen erfolgen.

Es ist sogar möglich, dass die ausgewählten Einwirkungsbereiche in ihrer Gesamtheit mit allen Konturen des Werkstücks übereinstimmen, in denen das Werkstück zwischen dem Beginn der Bearbeitung und dem Ende der Bearbeitung vorliegt. Damit ist es möglich, ausgehend von dem entsprechenden Volumendatensatz Schnittbilder, Schichtbilder, dreidimensionale Darstellungen oder Stellen gleicher resultierender Prozessgröße zu ermitteln und auszugeben. Die Ausgabe erfolgt auch hier wieder vorzugsweise mit einer codierten Darstellung der resultierenden Prozessgröße.

Vorzugsweise wird die örtliche Verteilung der resultierenden Prozessgröße mit oder ohne Berücksichtigung von Nachbarschaftsbeziehungen zwischen den den Einwirkungsbereichen zugeordneten resultierenden Prozessgrößen statistisch ausgewertet. Dadurch ist eine automatisierte Erkennung von Schwankungen der Eigenschaften des Werkstücks und damit eine Beurteilung der Qualität des Werkstücks möglich. Insbesondere kann überprüft werden, ob die resultierenden Prozessgrößen oder deren Schwankungen vorgegebene Grenzen verletzen. In diesem Fall kann - je nach Ergebnis der Überprüfung - eine Warnmeldung ausgegeben werden oder keine Warnmeldung bzw. eine OK-Meldung ausgegeben werden.

Weiterhin kann es sinnvoll sein, parallel zur Bearbeitung des Werkstücks durch das Werkzeug in Echtzeit die jeweilige Kontur des Werkstücks zu ermitteln, ein Bild der jeweiligen Kontur auszugeben und in dem Bild der jeweiligen Kontur die resultierenden Prozessgrößen derjenigen Einwirkungsbereiche, die an die jeweilige Kontur angrenzen, auf die jeweilige Kontur abzubilden. Dadurch kann eine Bedienperson bereits bei der Bearbeitung des Werkstücks durch das Werkzeug direkt und sofort eine etwaige Unregelmäßigkeit erkennen. Das Ausgeben der jeweils aktuellen Kontur und das Aktualisieren der resultierenden Prozessgrößen können dabei einfach und schnell realisiert werden, weil nur die Änderungen gegenüber dem vorherigen Bearbeitungszeitpunkt nachgeführt werden müssen. Die Änderungen sind somit für jeden Bearbeitungszeitpunkt lokal eng begrenzt.

In der Regel erfolgt eine Abbildung der Einwirkungsbereiche in Volumenelemente eines Volumendatensatzes. Die jeweilige resultierende Prozessgröße wird in diesem Fall den jeweiligen Volumenelementen zugeordnet, die mit dem jeweiligen Einwirkungsbereich korrespondieren. Hierbei können verschiedene Fälle auftreten. In dem Fall, dass ein jeweiliges Volumenelement vollständig in einem der Einwirkungsbereiche enthalten ist, wird dem jeweiligen Volumenelement die für den jeweiligen Einwirkungsbereich ermittelte resultierende Prozessgröße zugeordnet wird. In dem Fall, dass ein jeweiliges Volumenelement in mindestens zwei der Einwirkungsbereiche jeweils teilweise enthalten ist, wird dem jeweiligen Volumenelement vorzugsweise mindestens eine der folgenden Größen zugeordnet:
- die resultierende Prozessgröße desjenigen Einwirkungsbereichs, bei dem der größte Anteil des jeweiligen Volumenelements beeinflusst wird,
- die resultierende Prozessgröße desjenigen Einwirkungsbereichs, bei dem das jeweilige Volumenelement erstmals oder letztmals beeinflusst wird,
- ein gewichteter oder ungewichteter Mittelwert der resultierenden Prozessgrößen der Einwirkungsbereiche, die jeweils teilweise in das jeweilige Volumenelement abgebildet werden, oder
- die größte oder die kleinste resultierende Prozessgröße der Einwirkungsbereiche, die jeweils teilweise in das jeweilige Volumenelement abgebildet werden.

Dadurch kann auch in dem Fall, dass ein jeweiliges Volumenelement in mindestens zwei der Einwirkungsbereiche jeweils teilweise enthalten ist, eine optimale Zuordnung der resultierenden Prozessgröße erfolgen.

Die Aufgabe wird weiterhin durch ein Computerprogramm mit den Merkmalen des Anspruchs 15 gelöst. Erfindungsgemäß bewirkt bei einem Computerprogramm der eingangs genannten Art die Abarbeitung des Maschinencodes durch die Recheneinrichtung, dass die Recheneinrichtung ein erfindungsgemäßes Ermittlungsverfahren ausführt.

Die Aufgabe wird weiterhin durch eine Recheneinrichtung mit den Merkmalen des Anspruchs 16 gelöst. Eine vorteilhafte Ausgestaltungen der Recheneinrichtung ist Gegenstand des abhängigen Anspruchs 17.

Erfindungsgemäß ist eine Recheneinrichtung der eingangs genannten Art mit einem erfindungsgemäßen Computerprogramm programmiert, so dass sie im Betrieb ein erfindungsgemäßes Ermittlungsverfahren ausführt.

Die Recheneinrichtung kann eine eigenständige, von der Steuereinrichtung der Werkzeugmaschine verschiedene Einrichtung sein. Vorzugsweise ist sie jedoch mit der Steuereinrichtung der Werkzeugmaschine identisch.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein erfindungsgemäßes System,
- FIG 2: eine Abfolge von Vektoren,
- FIG 3 bis 7: je ein Ablaufdiagramm,
- FIG 8: eine Abbildung von Einwirkungsbereichen auf Volumenelemente,
- FIG 9: ein Ablaufdiagramm.

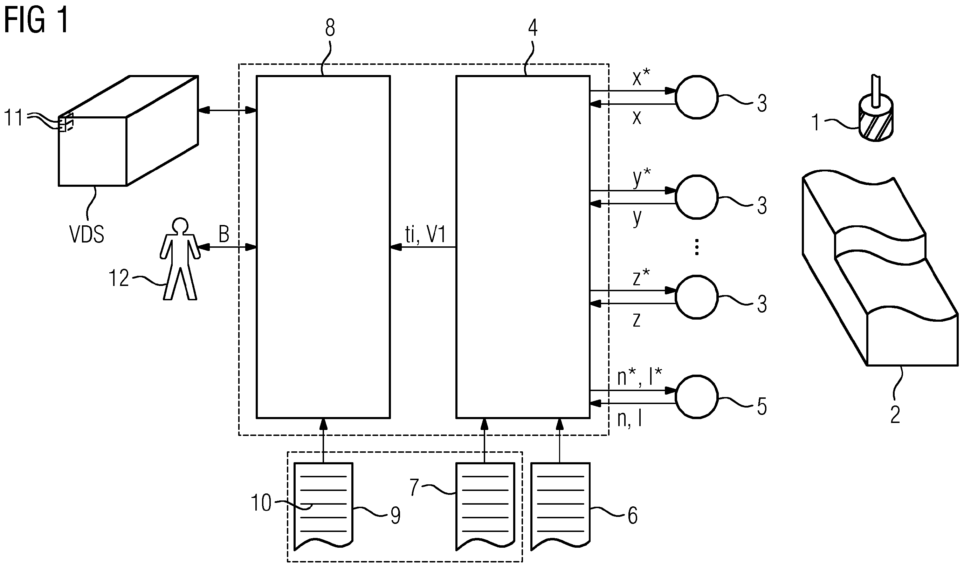

Gemäß FIG 1 weist eine Werkzeugmaschine ein Werkzeug 1 auf, mittels dessen ein Werkstück 2 konturverändernd bearbeitet werden soll. Die durch die Bearbeitung bewirkte Konturveränderung kann insbesondere das Abtragen von Material von dem Werkstück 2 sein. Beispielsweise kann eine spanende Bearbeitung erfolgen. Entsprechend einer spanenden Bearbeitung ist in FIG 1 das Werkzeug 1 als Fräser dargestellt. Prinzipiell könnte jedoch auch ein Materialauftrag erfolgen.

Im Falle der Ausbildung des Werkzeugs 1 als Fräser kann der Fräser insbesondere als Messerkopf oder als Fingerfräser ausgebildet sein. Ein Messerkopf ist ein Fräser, der in Richtung seiner Rotationsachse gesehen zwar meist nur eine relativ geringe Höhe von meist nicht mehr als 20 mm aufweist, jedoch einen relativ großen Durchmesser von 10 mm und mehr aufweist, oftmals von mehr als 30 mm. Ein Fingerfräser ist ein Fräser, der zwar einen relativ kleinen Durchmesser von meist nicht mehr als 15 mm aufweist, sich aber in Richtung seiner Rotationsachse über eine erhebliche Länge von meist mehr als 80 mm erstreckt, oftmals mehr als 150 mm.

Zum Einstellen der Position bzw. dere kartesischen Koordinaten x, y, z des Werkzeugs 1 relativ zum Werkstück 2 - und gegebenenfalls auch der Orientierung des Werkzeugs 1 relativ zum Werkstück 2 - weist die Werkzeugmaschine eine hinreichende Anzahl an lagegeregelten Achsen 3 auf. Minimal sind in aller Regel drei lagegeregelte Achsen 3 vorhanden. Oftmals beträgt die Anzahl an lagegeregelten Achsen 3 jedoch vier oder fünf. Auch noch größere Anzahlen an lagegeregelten Achsen 3 sind möglich. Den lagegeregelten Achsen 3 werden von einer Steuereinrichtung 4 der Werkzeugmaschine entsprechende Folgen von Lagesollwerten vorgegeben. Nachfolgend wird aus Gründen der einfacheren Darstellung angenommen, dass den lagegeregelten Achsen 3 als Lagesollwerte direkt die entsprechenden Sollpositionen x*, y* und z* in dem kartesischen Koordinatensystem vorgegeben werden. Die Begriffe "Lagesollwerte" und "Sollpositionen" werden daher nachfolgend synonym verwendet. Gegebenenfalls ist es jedoch auch möglich, dass die Lagesollwerte durch eine kinematische Transformation aus den Sollpositionen x*, y* und z* ermittelt werden müssen.

Die lagegeregelten Achsen 3 liefern entsprechende Lageistwerte zurück. Analog zur vorstehend angenommenen Äquivalenz von Lagesollwerten und Sollpositionen x*, y* und z* wird nachfolgend angenommen, dass die Lageistwerte direkt mit den Istpositionen x, y, z in dem kartesischen Koordinatensystem korrespondieren. Gegebenenfalls ist es jedoch erforderlich, die Istpositionen x, y, z durch eine zur vorgenannten kinematischen Transformation inverse kinematische Transformation aus den Lageistwerten zu ermitteln.

Zum Antreiben des Werkzeugs 1 ist weiterhin eine drehzahlgeregelte Achse 5 vorhanden. Die drehzahlgeregelte Achse 5 wird von der Steuereinrichtung 4 mit einem entsprechenden Drehzahlsollwert n* gesteuert. Der Drehzahlsollwert n* kann alternativ auf den Antrieb der drehzahlgeregelten Achse 5 selbst oder auf das Werkzeug 1 bezogen sein. Oftmals wird dem Antrieb der drehzahlgeregelten Achse 5 weiterhin auch ein Stromsollwert I* vorgegeben. Die drehzahlgeregelte Achse 5 liefert der Steuereinrichtung 4 zumindest den korrespondierenden Drehzahlistwert n und oftmals auch den korrespondierenden Stromistwert I zurück. Die sensorische Erfassung von Drehzahl n und Strom I und hierauf aufbauend die Ermittlung von beispielsweise einem Drehmoment M des drehzahlgeregelten Antriebs bzw. des Werkzeugs 1 ist Fachleuten allgemein bekannt.

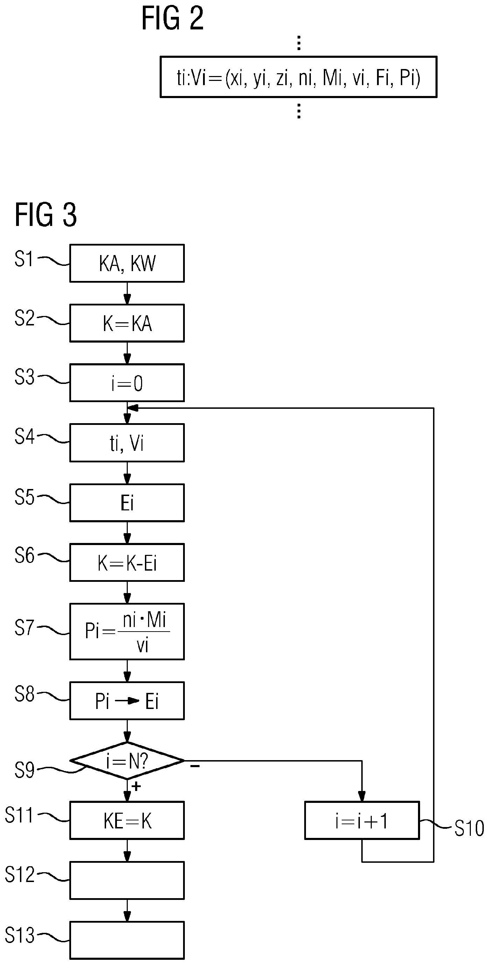

Die Folgen von Lagesollwerten x*, y*, z* sind in der Regel durch ein Teileprogramm 6 bestimmt, das der Steuereinrichtung 4 vorgegeben wird. Die Steuereinrichtung 4 arbeitet das Teileprogramm 6 unter Steuerung durch ein Systemprogramm 7 ab. Somit ergibt sich entsprechend der Darstellung in FIG 2 für eine Abfolge von Bearbeitungszeitpunkten ti eine zugehörige Abfolge von Vektoren Vi, wobei i = 1, 2, 3, ... N ein Index ist. Jeder Vektor Vi umfasst zumindest die für den jeweiligen Bearbeitungszeitpunkt ti gültige Position x, y, z und mindestens eine Prozessgröße. Die Prozessgröße kann beispielsweise die entsprechende Drehzahl n des Werkzeugs 1, das Drehmoment M des Werkzeugs 1 oder eine Vorschubgeschwindigkeit v des Werkzeugs 1 relativ zum Werkstück 2 sein. Auch eine Vorschubkraft F kommt in Frage. Es ist möglich, dass die Prozessgröße bzw. eine der Prozessgrößen direkt die resultierende Prozessgröße P ist. Alternativ ist es möglich, dass die resultierende Prozessgröße P aus einer oder mehreren der Prozessgrößen abgeleitet wird. In diesem Fall kann der jeweilige Vektor Vi - alternativ oder zusätzlich zu der Prozessgröße bzw. den Prozessgrößen - auch die resultierende Prozessgröße P enthalten.

Die für den jeweiligen Bearbeitungszeitpunkt ti gültige Position x, y, z und die Größen n, M, v, P sind in FIG 2 ebenfalls mit dem Index i versehen. Der jeweilige Vektor Vi kann entsprechend der Darstellung in FIG 2 als Position xi, yi, zi die Lageistwerte x, y, z bzw. die Istpositionen x, y, z enthalten. Alternativ handelt es sich um die korrespondierenden Lagesollwerte x*, y*, z* bzw. Sollpositionen x*, y*, z*.

Die Vektoren Vi werden an eine der Steuereinrichtung 4 zugeordnete Recheneinrichtung 8 übermittelt. In der Recheneinrichtung 8 wird die Abfolge der Vektoren Vi gespeichert. Die Recheneinrichtung 8 ist mit einem Computerprogramm 9 programmiert. Das Computerprogramm 9 umfasst Maschinencode 10, der von der Recheneinrichtung 8 unmittelbar abarbeitbar ist. Die Abarbeitung des Maschinencodes 10 durch die Recheneinrichtung 8 bewirkt, dass die Recheneinrichtung 8 ein Ermittlungsverfahren ausführt, das nachstehend in Verbindung mit FIG 3 näher erläutert wird.

Die Recheneinrichtung 8 ist in FIG 1 als von der Steuereinrichtung 4 verschiedene Einrichtung dargestellt. Alternativ ist es jedoch möglich, dass die Recheneinrichtung 8 mit der Steuereinrichtung 4 identisch ist. Dies ist in FIG 1 durch eine gestrichelte Umrahmung angedeutet, in der sich sowohl die Steuereinrichtung 4 als auch die Recheneinrichtung 8 befinden. In diesem Fall wäre auch das Systemprogramm 7 der Steuereinrichtung 4 mit dem Computerprogramm 9 der Recheneinrichtung 8 identisch. Dies ist in FIG 1 durch eine gestrichelte Umrahmung angedeutet, in der sich sowohl das Systemprogramm 7 als auch das Computerprogramm 9 befinden.

Gemäß FIG 3 nimmt die Recheneinrichtung 8 unter Abarbeitung des Maschinencodes 10 des Computerprogramms 9 zunächst in einem Schritt S1 Informationen über eine Anfangskontur KA des Werkstücks 2 und eine Werkzeugkontur KW des Werkzeugs 1 entgegen. In einem Schritt S2 setzt die Recheneinrichtung 8 eine aktuelle Kontur K des Werkstücks 2 gleich der Anfangskontur K. Sodann setzt die Recheneinrichtung 8 in einem Schritt S3 den Index i auf den Wert 1.

In einem Schritt S4 nimmt die Recheneinrichtung 8 die Position xi, yi, zi für den Index i entgegen. Weiterhin nimmt die Recheneinrichtung 8 im Schritt S4 die zugehörigen Prozessgrößen ni, Mi, vi entgegen. Insbesondere kann die Recheneinrichtung 8 zu diesem Zweck im Schritt S4 den jeweiligen Bearbeitungszeitpunkt ti und den zugehörigen Vektor Vi entgegennehmen. In einem Schritt S5 ermittelt die Recheneinrichtung 8 das von dem Werkzeug 1 momentan eingenommene Volumen und ermittelt daraus in Verbindung mit der aktuellen Kontur K einen Einwirkungsbereich Ei für den aktuellen Bearbeitungszeitpunkt ti.

In einem Schritt S6 reduziert die Recheneinrichtung 8 die aktuelle Kontur K um den aktuellen Einwirkungsbereich Ei und ermittelt so eine modifizierte aktuelle Kontur für den nächsten Bearbeitungszeitpunkt.

Die Ermittlung des Einwirkungsbereichs Ei ist Fachleuten als solche bekannt. Insbesondere ist die aktuelle Kontur K bekannt, so dass ermittelt werden kann, an welchen Stellen - rein rechnerisch - sich sowohl die aktuelle Kontur K als auch das Werkzeug 1 befinden. Da sich jedoch in der realen Welt an der gleichen Stelle nicht sowohl die aktuelle Kontur K als auch das Werkzeug 1 befinden können, erfolgt in diesem Bereich der Materialabtrag. Das ist - und zwar 1:1 - der Einwirkungsbereich Ei, in dem das Werkzeug 1 zum betrachteten Bearbeitungszeitpunkt ti auf das Werkstück 2 einwirkt. Entsprechende Materialabtragsmodelle sind dem Fachmann allgemein bekannt. Die Kombination der Schritte S5 und S6 entspricht somit der Implementierung eines an sich bekannten Materialabtragsmodells.

Im Rahmen der vorliegenden Erfindung wird angenommen, dass ein Materialabtrag erfolgt. In diesem Fall wird entsprechend dem Schritt S6 die Kontur K um den jeweiligen Einwirkungsbereich Ei verringert. Wenn umgekehrt ein Materialauftrag erfolgen würde, müsste die Kontur K um den jeweiligen Einwirkungsbereich Ei vergrößert werden. Die Ermittlung des jeweiligen Einwirkungsbereichs Ei ist in diesem Fall zwar nicht so einfach wie bei einem Materialabtrag. Sie ist Fachleuten aber dennoch geläufig. Insbesondere ist für den jeweiligen Bearbeitungszeitpunkt ti die Kontur K des Werkstücks 2 vor der Bearbeitung im jeweiligen Bearbeitungszeitpunkt ti bekannt. Weiterhin ist auch bekannt, an welchen Stellen der Kontur K im jeweiligen Bearbeitungszeitpunkt ti welche Mengen an Material aufgebracht werden. Damit kann auch der Einwirkungsbereich Ei des jeweiligen Bearbeitungszeitpunkts ti ermittelt werden, um den sodann die Kontur K vergrößert wird.

In einem Schritt S7 ermittelt die Recheneinrichtung 8 weiterhin mindestens eine resultierende Prozessgröße Pi. Die resultierende Prozessgröße Pi kann beispielsweise die entsprechende Drehzahl n des Werkzeugs 1, das Drehmoment M des Werkzeugs 1, die Vorschubgeschwindigkeit v des Werkzeugs 1 relativ zum Werkstück 2 oder die Vorschubkraft F sein. Auch kann es sich um eine aus einer oder mehreren dieser Größen n, M, v abgeleitete Zwischengröße handeln, insbesondere entsprechend der Darstellung in FIG 3 um das Produkt von Drehzahl n und Drehmoment M, dividiert durch die Vorschubgeschwindigkeit v.

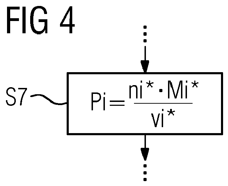

Entsprechend der Darstellung in FIG 3 ist die resultierende Prozessgröße Pi eine entweder direkt erfasste Istgröße oder eine aus einer derartigen Größe oder mehreren derartigen Größen abgeleitete Zwischengröße. Anstelle von Istgrößen könnten entsprechend der Darstellung in FIG 4 jedoch auch Sollgrößen verwendet werden. Weiterhin ist es möglich, insbesondere die Istgrößen - gegebenenfalls auch die Sollgrößen - zeitlich zu filtern und erst danach anhand der gefilterten Größen die resultierende Prozessgröße Pi zu ermitteln. Auch ist es möglich, zunächst anhand der ungefilterten - in Ausnahmefällen gefilterten - Istgrößen oder Sollgrößen eine Zwischengröße - beispielsweise das obenstehend erwähnte Produkt von Drehzahl n und Drehmoment M, dividiert durch die Vorschubgeschwindigkeit v - zu ermitteln und erst die Zwischengröße zeitlich zu filtern. In diesem Fall korrespondiert die resultierende Prozessgröße Pi mit der gefilterten Zwischengröße.

In einem Schritt S8 ordnet die Recheneinrichtung 8 die ermittelte resultierende Prozessgröße Pi dem für den jeweiligen Bearbeitungszeitpunkt ti ermittelten Einwirkungsbereich Ei zu. Insbesondere ist es entsprechend der Darstellung in FIG 1 möglich, dass die Recheneinrichtung einen im Ergebnis dreidimensionalen Volumensatz VDS definiert und den jeweiligen Einwirkungsbereiche Ei in den Volumendatensatz VDS - genauer: in Volumenelemente 11 des Volumendatensatzes VDS abbildet.

In einem Schritt S9 prüft die Recheneinrichtung 8, ob der Index i bereits einen Endwert N erreicht hat. Wenn dies nicht der Fall ist, geht die Recheneinrichtung 8 zu einem Schritt S10 über, in dem sie den Index i inkrementiert. Sodann geht sie zum Schritt S4 zurück. Anderenfalls, wenn also der Endwert N erreicht ist, geht die Recheneinrichtung 8 zu einem Schritt S11 über. Im Schritt S11 setzt die Recheneinrichtung 8 eine Endkontur KE des Werkstücks 2 gleich der zuletzt ermittelten aktuellen Kontur K. Sodann geht die Recheneinrichtung 8 zu einem Schritt S12 über. Im Schritt S12 erfolgt ein Ausgeben von visuellen Darstellungen an eine Bedienperson 12 der Recheneinrichtung 8. Alternativ oder zusätzlich zum Schritt S12 kann ein Schritt S13 vorhanden sein. Im Schritt S13 erfolgen automatische Auswertungen. Die Schritte S12 und S13 werden später noch näher erläutert werden.

Durch die Bearbeitung des Werkstücks 2 durch das Werkzeug 1 wird das Werkstück 2 somit von der Anfangskontur KA, die das Werkstück 2 zu Beginn der Bearbeitung aufweist, in die Endkontur KE überführt, die das Werkstück 2 am Ende der Bearbeitung aufweist. Aufgrund des Umstands, dass eine materialabtragende Bearbeitung des Werkstücks 2 angenommen wurde, entspricht die Anfangskontur KA einer Maximalkontur des Werkstücks 2, die Endkontur KE einer Minimalkontur. Bei einer materialauftragenden Bearbeitung wäre es umgekehrt.

Aus den obigen Ausführungen ergibt sich weiterhin, dass die Einwirkungsbereiche Ei zueinander disjunkt sind. Denn die aktuelle Kontur K wird um einen für einen bestimmten Bearbeitungszeitpunkt ti ermittelten Einwirkungsbereich Ei reduziert. Dieser Bereich kann daher im Rahmen jedes nachfolgenden Bearbeitungszeitpunkts ti nicht mehr als Einwirkungsbereich Ei ermittelt werden. Analoge Ausführungen gelten im Falle eines Materialauftrags.

Im Rahmen der Vorgehensweise von FIG 3 stimmen die Einwirkungsbereiche Ei mit allen Konturen K des Werkstücks 2 überein, in denen das Werkstück 2 zwischen dem Beginn der Bearbeitung und dem Ende der Bearbeitung vorliegt. Dies gilt auch für die Grenzen der Bearbeitung, also die Anfangskontur KA und die Endkontur KE. In diesem Fall korrespondieren die Einwirkungsbereiche Ei in ihrer Gesamtheit mit einem Volumen, das die Maximalkontur umfasst. Somit können im Schritt S12, ausgehend von dem dieses Volumen umfassenden Volumendatensatz VDS, Schnittbilder, Schichtbilder oder dreidimensionale Darstellungen von Konturen K für jeden beliebigen Bearbeitungszeitpunkt ti ermittelt werden. In diesen Darstellungen können die jeweiligen Prozessgrößen Pi mit dargestellt werden. Insbesondere kann eine durch Farben oder Graustufen codierte Darstellung erfolgen. Auch ist es möglich, Stellen gleicher resultierender Prozessgröße Pi zu ermitteln und diese Bereiche darzustellen. Entsprechende Vorgehensweisen sind Fachleuten auf dem Gebiet der Verarbeitung und Darstellung dreidimensionaler Volumendatensätze allgemein bekannt. Insbesondere im medizinischen Bereich (Computertomografie oder Magnetresonanztomographie) sind die entsprechenden Vorgehensweisen allgemein bekannt.

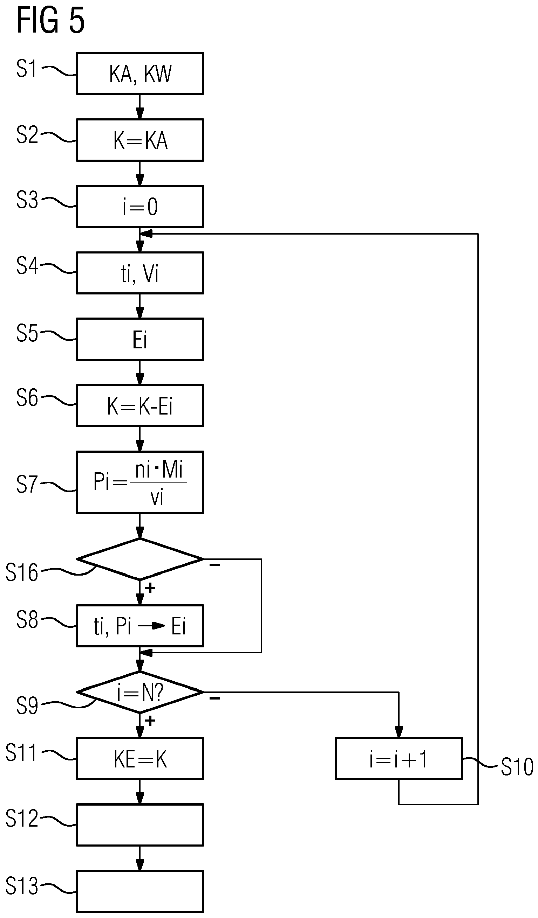

Alternativ zu einer Zuordnung der jeweiligen resultierenden Prozessgröße Pi zum jeweiligen Einwirkungsbereich Ei für alle Einwirkungsbereiche Ei ist es möglich, die Vorgehensweise von FIG 3 entsprechend der Darstellung in FIG 5 zu modifizieren. FIG 5 geht von FIG 3 aus. Nachstehend werden daher nur die zusätzlichen Maßnahmen erläutert.

Gemäß FIG 5 ist zusätzlich ein Schritt S16 vorhanden. Im Schritt S16 prüft die Recheneinrichtung 8, ob die resultierende Prozessgröße Pi dem jeweiligen Einwirkungsbereich Ei zugeordnet werden soll oder nicht. Je nach Ergebnis der Prüfung wird der Schritt S8 ausgeführt oder übersprungen. Gegebenenfalls kann zusätzlich auch der Schritt S7 mit übersprungen werden.

Die Prüfung des Schrittes S16 kann nach Bedarf bestimmt sein. Sie kann insbesondere derart bestimmt sein, dass die Einwirkungsbereiche Ei, für die der Schritt S8 ausgeführt wird, derart bestimmt sind, dass sie mit den jeweiligen Konturen K des Werkstücks 2 übereinstimmen, wie sie zu mehreren zwischen dem Beginn der Bearbeitung und dem Ende der Bearbeitung liegenden Bearbeitungszeitpunkten ti vorliegen. In diesem Fall ist entsprechend der Darstellung in FIG 5 der Schritt S8 dahingehend modifiziert, dass dem jeweiligen Einwirkungsbereich Ei nicht nur die jeweilige resultierende Prozessgröße Pi, sondern zusätzlich auch der jeweilige Bearbeitungszeitpunkt ti, während dessen das Werkzeug 1 das Werkzeug 1 auf den entsprechenden Einwirkungsbereich Ei einwirkt, zugeordnet wird.

In diesem Fall ist es beispielsweise möglich, dass die Recheneinrichtung 8 eine entsprechende zeitliche Abfolge von Konturen K des Werkstücks 2 ermittelt und die jeweilige Kontur K einschließlich der Zuordnung der entsprechenden resultierenden Prozessgrößen Pi ähnlich eines Films an die Bedienperson 12 ausgibt. Die Kodierung der Prozessgrößen Pi kann wie zuvor erwähnt erfolgen. Selbstverständlich kann die Recheneinrichtung 8 auch für jeden einzelnen Bearbeitungszeitpunkt ti die entsprechende einzelne Kontur K ermitteln und an die Bedienperson 12 ausgeben.

Es ist sogar möglich, dass die Einwirkungsbereiche Ei, für die der Schritt S8 ausgeführt wird, derart bestimmt sind, dass sie nur mit einer einzelnen Kontur K des Werkstücks 2 übereinstimmen. Bei dieser Kontur K kann es sich insbesondere um die Endkontur KE handeln. Alternativ kann es sich um eine Kontur K handeln, die während der Bearbeitung des Werkstücks 2 durch das Werkzeug vorliegt, also eine Kontur K zwischen der Anfangskontur KA und der Endkontur KE. In Einzelfällen kann es auch möglich sein, die Einwirkungsbereiche Ei, für die der Schritt S8 ausgeführt wird, derart zu bestimmen, dass sie nur mit der Anfangskontur KA des Werkstücks 2 übereinstimmen.

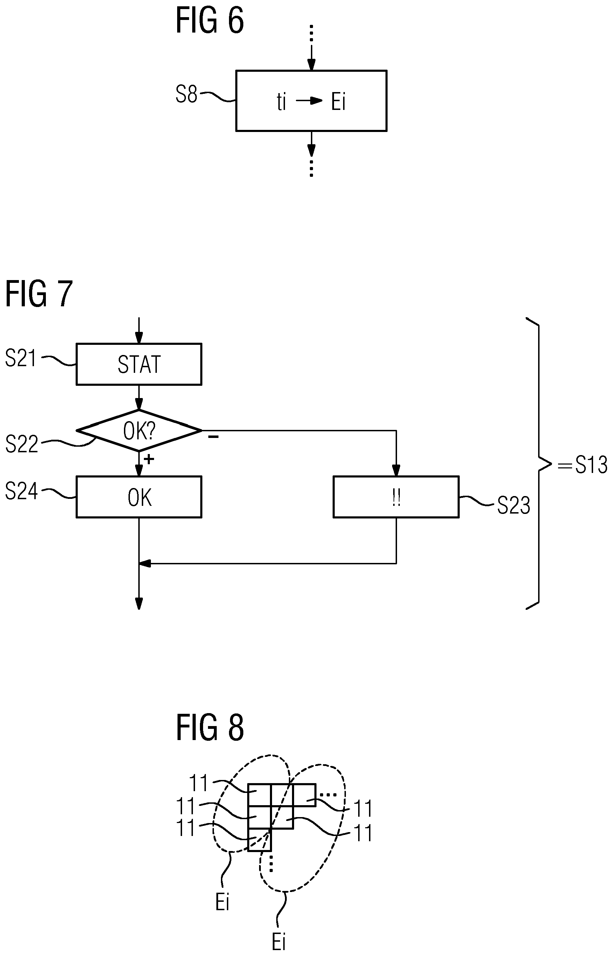

Im Rahmen der obenstehend erläuterten Vorgehensweise wird die jeweilige resultierende Prozessgröße Pi dem jeweiligen Einwirkungsbereich Ei direkt zugeordnet. Insbesondere wird die jeweilige resultierende Prozessgröße Pi in die entsprechenden Volumenelemente 11 des Volumendatensatzes VDS eingeschrieben Dies ist jedoch nicht zwingend erforderlich. Alternativ ist es möglich, den Schritt S8 derart auszugestalten, dass die jeweilige resultierende Prozessgröße Pi dem jeweiligen Einwirkungsbereich Ei indirekt über eine Verzeigerung zugeordnet wird. Insbesondere kann die jeweilige resultierende Prozessgröße Pi dem jeweiligen Einwirkungsbereich Ei durch Verzeigerung auf den korrespondierenden Vektor Vi zugeordnet werden. Dies geschieht am einfachsten dadurch, dass dem jeweiligen Einwirkungsbereich Ei entsprechend der Darstellung in FIG 6 der zugehörige Bearbeitungszeitpunkt ti zugeordnet wird. In diesem Fall kann schnell und einfach anhand des zugeordneten Bearbeitungszeitpunkts ti der entsprechende Vektor Vi ermittelt werden und entweder dem Vektor Vi die resultierende Prozessgröße Pi direkt entnommen werden oder anhand der in dem Vektor Vi hinterlegten Prozessgrößen ermittelt werden.

Im Rahmen des Schrittes S13 von FIG 3 kann entsprechend der Darstellung in FIG 7 insbesondere zunächst im Rahmen eines Schrittes S21 eine statistische Auswertung der örtlichen Verteilung der den Einwirkungsbereichen Ei zugeordneten resultierenden Prozessgrößen Pi erfolgen. Im Rahmen dieser Auswertung können nach Bedarf Nachbarschaftsbeziehungen zwischen den Einwirkungsbereichen Ei berücksichtigt werden oder nicht berücksichtigt werden. Es ist möglich, dass sodann die entsprechenden statistischen Kenngrößen - beispielsweise ein Mittelwert, der Minimalwert, der Maximalwert, eine Streuung und dergleichen mehr - nur an die Bedienperson 12 ausgegeben werden. Vorzugsweise ist jedoch ein Schritt S22 vorhanden, in dem die Recheneinrichtung 8 eigenständig prüft, ob die resultierenden Prozessgrößen Pi oder deren Schwankungen vorgegebene Grenzen verletzen. Wenn dies der Fall ist, wird in einem Schritt S23 eine Warnmeldung - in FIG 7 durch zwei Ausrufezeichen angedeutet - ausgegeben. Anderenfalls wird in einem Schritt S24 eine OK-Meldung ausgegeben. Gegebenenfalls kann die Ausgabe der OK-Meldung auch unterbleiben, so dass in diesem Fall lediglich keine Warnmeldung ausgegeben wird.

Wie bereits erwähnt, werden die Einwirkungsbereiche Ei vorzugsweise in den Volumendatensatz VDS abgebildet. Der Volumendatensatz VDS kann von seinem strukturellen Aufbau her nach Bedarf bestimmt sein. Insbesondere können die Volumenelemente 11 a priori vordefiniert sein, also jeweils ein nach Länge, Breite und Höhe vordefiniertes Volumen einnehmen. In diesem Fall ist der Volumendatensatz VDS als "echt dreidimensionaler" Volumendatensatz ausgebildet. Die einzelnen Volumenelemente 11 sind in diesem Fall durch drei das Volumen aufspannende Koordinaten (beispielsweise x, y und z) spezifiziert bzw. indexiert. Alternativ kann der Volumendatensatz VDS als sogenannter zweieinhalbdimensionaler Volumendatensatz ausgebildet sein, bei dem die einzelnen Volumenelemente 11 durch zwei Koordinaten (beispielsweise x und y) in einer Ebene indexiert sind und zusätzlich eine Höhenangabe in einer zu der Ebene orthogonalen Richtung eine Höhe definiert ist. Welche dieser beiden Vorgehensweisen vorzuziehen ist, hängt von den Umständen des Einzelfalls ab.

Insbesondere dann, wenn der Volumendatensatz VDS als "echt dreidimensionaler" Volumendatensatz ausgebildet ist, kann es geschehen, dass eine Abbildung eines jeweiligen Einwirkungsbereichs Ei in den Volumendatensatz VDS nicht "glatt" mit den Volumenelementen 11 korrespondiert. Beispielsweise kann ein bestimmter Einwirkungsbereich Ei (in FIG 8 aus Anschauungsgründen zweidimensional dargestellt) eine erste Anzahl von Volumenelementen 11 vollständig enthalten und eine zweite Anzahl von Volumenelementen 11 teilweise enthalten. Soweit ein jeweiliges Volumenelement 11 vollständig dem jeweiligen Einwirkungsbereich enthalten ist, stellt dies den einfachen Fall dar. In diesem Fall wird dem jeweiligen Volumenelement 11 die für den jeweiligen Einwirkungsbereich Ei ermittelte resultierende Prozessgröße Pi zugeordnet. Soweit ein jeweiliges Volumenelement 11 in dem jeweiligen Einwirkungsbereich Ei nur teilweise enthalten ist, existiert - zumindest in der Regel - entsprechend der Darstellung in FIG 8 mindestens ein weiterer Einwirkungsbereich Ei, in dem dasselbe Volumenelement 11 ebenfalls teilweise enthalten ist. In diesem Fall kann dem entsprechenden Volumenelement 11 nach Bedarf mindestens eine der folgenden Größen zugeordnet werden:
- die resultierende Prozessgröße Pi desjenigen Einwirkungsbereichs Ei, bei dem der größte Anteil des jeweiligen Volumenelements 11 beeinflusst wird;
- die resultierende Prozessgröße Pi desjenigen Einwirkungsbereichs Ei, bei dem das jeweilige Volumenelement 11 erstmals beeinflusst wird;
- die resultierende Prozessgröße Pi desjenigen Einwirkungsbereichs Ei, bei dem das jeweilige Volumenelement 11 letztmals beeinflusst wird;
- ein gewichteter Mittelwert der resultierenden Prozessgrößen Pi der Einwirkungsbereiche Ei, die teilweise in das jeweilige Volumenelement 11 abgebildet werden; die Wichtung erfolgt in diesem Fall vorzugsweise entsprechend dem Anteil des entsprechenden Einwirkungsbereichs Ei an dem gesamten Volumenelement 11;
- ein ungewichteter Mittelwert der resultierenden Prozessgrößen Pi der Einwirkungsbereiche Ei, die teilweise in das jeweilige Volumenelement 11 abgebildet werden;
- die größte resultierende Prozessgröße Pi der Einwirkungsbereiche Ei, die teilweise in das jeweilige Volumenelement 11 abgebildet werden; oder
- die kleinste resultierende Prozessgröße Pi der Einwirkungsbereiche Ei, die teilweise in das jeweilige Volumenelement 11 abgebildet werden.

Es ist möglich, dass die Recheneinrichtung 8 das Ermittlungsverfahren zeitlich unabhängig von der Bearbeitung des Werkstücks 2 durch das Werkzeug 1 ausführt. Alternativ ist es möglich, dass die Recheneinrichtung 8 das Ermittlungsverfahren parallel zur Bearbeitung des Werkstücks 2 durch das Werkzeug 1 in Echtzeit ausführt. In diesem Fall wird die Vorgehensweise von FIG 3 zum einen in Echtzeit zusammen mit der Bearbeitung des Werkstücks 2 durch das Werkzeug 1 ausgeführt. Insbesondere der Schritt S6 wird somit in Echtzeit ausgeführt. Dadurch wird auch die jeweilige Kontur K des Werkstücks 2 in Echtzeit ermittelt.

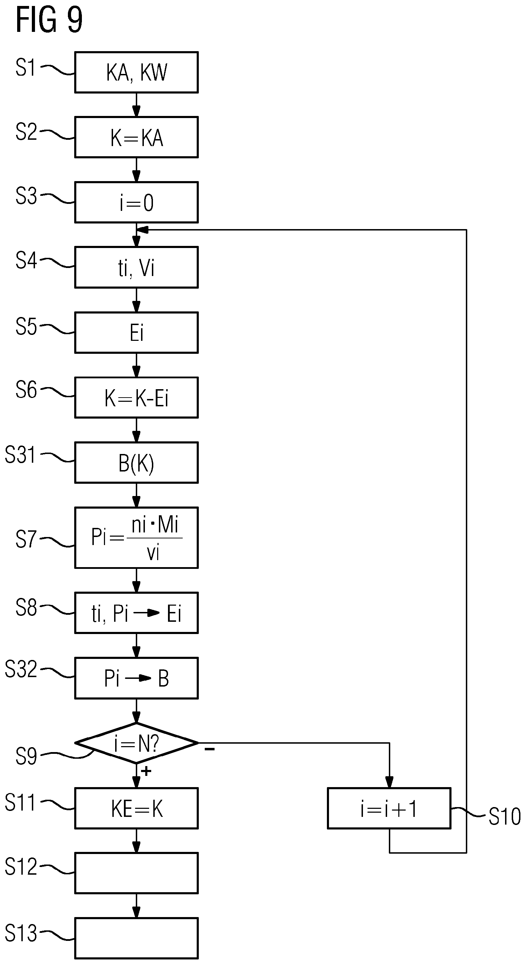

Weiterhin wird im Falle der Ausführungen Echtzeit die Vorgehensweise von FIG 3 entsprechend der Darstellung in FIG 9 modifiziert.

Insbesondere sind gemäß FIG 9 zusätzlich zu den Schritten von FIG 3 Schritte S31 und S32 vorhanden, die ebenfalls in Echtzeit ausgeführt werden. Im Schritt S31 ermittelt die Recheneinrichtung 8 ein Bild B der jeweiligen Kontur K und gibt es an die Bedienperson 12 aus. Im Schritt S32 bildet die Recheneinrichtung 8 in dem ermittelten Bild B der jeweiligen Kontur K die resultierenden Prozessgrößen Pi derjenigen Einwirkungsbereiche Ei ab, die an die jeweilige Kontur K angrenzen. Die Abbildung kann wie zuvor erläutert durch eine entsprechende Kodierung in vordefinierten Farben oder Graustufen erfolgen.

Vorstehend wurde die Werkzeugkontur KW nur einmal vorgegeben und danach unverändert beibehalten. In der Praxis erfolgt jedoch oftmals während der Bearbeitung einmal oder mehrmals ein Wechsel des Werkzeugs 1. Falls ein derartiger Wechsel erfolgt, wird die Werkzeugkontur KW selbstverständlich jeweils entsprechend angepasst.

Zusammengefasst betrifft die vorliegende Erfindung somit folgenden Sachverhalt:
Durch eine konturverändernde Bearbeitung eines Werkstücks 2 durch ein Werkzeug 1 wird das Werkstück 2 von einer Anfangskontur KA in eine Endkontur KE überführt. Aufgrund der Bearbeitung tritt eine resultierende Prozessgröße Pi auf. Für Bearbeitungszeitpunkte ti während der Bearbeitung des Werkstücks 2 werden jeweils eine aufgrund der Bearbeitung des Werkstücks 2 durch das Werkzeug 1 zu dem jeweiligen Bearbeitungszeitpunkt ti resultierende jeweilige Prozessgröße Pi und ein jeweiliger Einwirkungsbereich Ei des Werkstücks 2 ermittelt. Der jeweilige Einwirkungsbereich Ei korrespondiert mit einer zum jeweiligen Bearbeitungszeitpunkt ti durch das Werkzeug 1 bewirkten Konturveränderung des Werkstücks 2. Zumindest ausgewählten der Einwirkungsbereiche Ei wird die für den jeweiligen Bearbeitungszeitpunkt ti ermittelte jeweilige resultierende Prozessgröße Pi zugeordnet. Die ausgewählten Einwirkungsbereiche 1 sind derart bestimmt, dass sie mit der Anfangskontur KA, der Endkontur KE und/oder mit mindestens einer der Konturen K des Werkstücks 2 während der Bearbeitung übereinstimmen.

Die vorliegende Erfindung weist viele Vorteile auf. Insbesondere wird durch das erfindungsgemäße Ermittlungsverfahren ein dreidimensionales Volumenmodell der resultierenden Prozessgrößen Pi erstellt, wobei Visualisierungen des erstellten Volumenmodells nach Bedarf erfolgen können. Das Volumenmodell eignet sich daher hervorragend für spätere Prozessoptimierungen und für die Erkennung von Anomalien im Fertigungsprozess. Auch ist es oftmals möglich, Störungen im Werkstück 2 zu erkennen. Derartige Störungen können bereits vor der Bearbeitung durch das Werkzeug 1 vorhanden sein und insbesondere veränderte Bearbeitungskräfte bewirken und dadurch erkennbar sein. Die Ursache können beispielsweise Werkstoffabweichungen sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ermittlungsverfahren für eine örtliche Verteilung mindestens einer resultierenden Prozessgröße (Pi), die aufgrund einer durch eine Steuereinrichtung (4) einer Werkzeugmaschine gesteuerten konturverändernden Bearbeitung eines Werkstücks (2) durch ein Werkzeug (1) auftritt, durch die das Werkstück (2) von einer zu Beginn der konturverändernden Bearbeitung vorliegenden Anfangskontur (KA) des Werkstücks (2) in eine am Ende der Bearbeitung vorliegende Endkontur (KE) überführt wird,
- wobei für Bearbeitungszeitpunkte (ti) während der Bearbeitung des Werkstücks (2) durch das Werkzeug (1) jeweils eine zu dem jeweiligen Bearbeitungszeitpunkt (ti) aufgrund der Bearbeitung resultierende jeweilige Prozessgröße (Pi) und ein zu dem jeweiligen Bearbeitungszeitpunkt (ti) gegebener jeweiliger Einwirkungsbereich (Ei) des Werkstücks (2) ermittelt werden,
- wobei der jeweilige Einwirkungsbereich (Ei) mit einer zum jeweiligen Bearbeitungszeitpunkt (ti) durch das Werkzeug (1) bewirkten Konturveränderung des Werkstücks (2) korrespondiert,
- wobei zumindest ausgewählten der Einwirkungsbereiche (Ei) die für den jeweiligen Bearbeitungszeitpunkt (ti) ermittelte jeweilige resultierende Prozessgröße (Pi) zugeordnet wird,
- wobei die ausgewählten Einwirkungsbereiche (1) derart bestimmt sind, dass sie mit der Anfangskontur (KA) des Werkstücks (2) und/oder mit der Endkontur (KE) des Werkstücks (2) und/oder mit mindestens einer der Konturen (K) des Werkstücks (2), in denen das Werkstück (2) während der Bearbeitung vorliegt, übereinstimmen.

2. Ermittlungsverfahren nach Anspruch 1,
**dadurch gekennzeichnet,**
**dass** die konturverändernde Bearbeitung eine materialabtragende Bearbeitung ist, insbesondere eine spanende Bearbeitung.

3. Ermittlungsverfahren nach Anspruch 2,
**dadurch gekennzeichnet,**
**dass** die resultierende Prozessgröße (Pi) eine Drehzahl (n) des Werkzeugs (1), ein Drehmoment (M) des Werkzeugs (1), eine Vorschubgeschwindigkeit (v) des Werkzeugs (1) relativ zum Werkstück (2), eine Vorschubkraft (F) oder eine aus mindestens einer dieser Größen (n, M, v) abgeleitete Zwischengröße ist.

4. Ermittlungsverfahren nach Anspruch 1, 2 oder 3,
**dadurch gekennzeichnet,**
**dass** die dem jeweiligen Einwirkungsbereich (Ei) zugeordnete resultierende Prozessgröße (Pi) eine Sollgröße, eine erfasste Istgröße oder eine aus mindestens einer derartigen Größe abgeleitete Zwischengröße ist.

5. Ermittlungsverfahren nach Anspruch 4,
**dadurch gekennzeichnet,**
**dass** vor der Zuordnung der jeweiligen resultierenden Prozessgröße (Pi) zum jeweiligen Einwirkungsbereich (Ei) eine zeitliche Filterung der Sollgröße oder der erfassten Istgröße erfolgt und die resultierende Prozessgröße (Pi) anhand der gefilterten Größen ermittelt wird oder dass anhand mehrerer Sollgrößen und/oder Istgrößen eine Zwischengröße ermittelt wird, die Zwischengröße zeitlich gefiltert wird und die resultierende Prozessgröße (Pi) mit der gefilterten Zwischengröße korrespondiert.

6. Ermittlungsverfahren nach einem der Ansprüche 1 bis 5,
**dadurch gekennzeichnet,**
**dass** die jeweilige resultierende Prozessgröße (Pi) dem jeweiligen Einwirkungsbereich (Ei) direkt zugeordnet wird.

7. Ermittlungsverfahren nach einem der Ansprüche 1 bis 5,
**dadurch gekennzeichnet,**
**dass** die jeweilige resultierende Prozessgröße (Pi) dem jeweiligen Einwirkungsbereich (Ei) indirekt über eine Verzeigerung zugeordnet wird.

8. Ermittlungsverfahren nach Anspruch 7,
**dadurch gekennzeichnet,**
**dass** die jeweiligen resultierenden Prozessgrößen (Pi) und/ oder den resultierenden Prozessgrößen (Pi) zugrunde liegende Größen (n, M, v) unter Zuordnung zum jeweiligen Bearbeitungszeitpunkt (ti) als zeitliche Folge abgespeichert werden und dass die Verzeigerung dem jeweiligen Einwirkungsbereich (Ei) durch Zuordnung des entsprechenden Bearbeitungszeitpunkts (ti) zugeordnet wird.

9. Ermittlungsverfahren nach einem der obigen Ansprüche,
**dadurch gekennzeichnet,**
- **dass** die ausgewählten Einwirkungsbereiche (Ei) derart bestimmt sind, dass sie mit den jeweiligen Konturen (K) des Werkstücks (2) übereinstimmen, wie sie zu mehreren zwischen dem Beginn der Bearbeitung und dem Ende der Bearbeitung liegenden Bearbeitungszeitpunkten (ti) vorliegen, und
- **dass** den ausgewählten Einwirkungsbereichen (Ei) zusätzlich zur jeweiligen resultierenden Prozessgröße (Pi) der jeweilige Bearbeitungszeitpunkt (ti) zugeordnet ist.

10. Ermittlungsverfahren nach Anspruch 9,
**dadurch gekennzeichnet,**
**dass** die ausgewählten Einwirkungsbereiche (Ei) mit allen Konturen (K) des Werkstücks (2) übereinstimmen, in denen das Werkstück (2) zwischen dem Beginn der Bearbeitung und dem Ende der Bearbeitung vorliegt.

11. Ermittlungsverfahren nach einem der obigen Ansprüche,
**dadurch gekennzeichnet,**
**dass** die örtliche Verteilung der resultierenden Prozessgröße (Pi) mit oder ohne Berücksichtigung von Nachbarschaftsbeziehungen zwischen den den Einwirkungsbereichen (Ei) zugeordneten resultierenden Prozessgrößen (Pi) statistisch ausgewertet wird.

12. Ermittlungsverfahren nach Anspruch 11,
**dadurch gekennzeichnet,**
**dass** überprüft wird, ob die resultierenden Prozessgrößen (Pi) oder deren Schwankungen vorgegebene Grenzen verletzen, und je nach Ergebnis der Überprüfung eine Warnmeldung ausgegeben wird oder keine Warnmeldung bzw. eine OK-Meldung ausgegeben wird.

13. Ermittlungsverfahren nach einem der obigen Ansprüche, **dadurch gekennzeichnet,**
**dass** parallel zur Bearbeitung des Werkstücks (2) durch das Werkzeug (1) in Echtzeit die jeweilige Kontur (K) des Werkstücks (2) ermittelt wird, dass ein Bild (B) der jeweiligen Kontur (K) ausgegeben wird und dass in dem Bild (B) der jeweiligen Kontur (K) die resultierenden Prozessgrößen (Pi) derjenigen Einwirkungsbereiche (Ei), die an die jeweilige Kontur (K) angrenzen, auf die jeweilige Kontur (K) abgebildet werden.

14. Ermittlungsverfahren nach einem der obigen Ansprüche,
**dadurch gekennzeichnet,**
- **dass** eine Abbildung der Einwirkungsbereiche (Ei) in Volumenelemente (11) eines Volumendatensatzes (VDS) erfolgt,
- **dass** in dem Fall, dass ein jeweiliges Volumenelement (11) vollständig in einem der Einwirkungsbereiche (Ei) enthalten ist, dem jeweiligen Volumenelement (11) die für den jeweiligen Einwirkungsbereich (Ei) ermittelte resultierende Prozessgröße (Pi) zugeordnet wird,
- **dass** in dem Fall, dass ein jeweiliges Volumenelement (11) in mindestens zwei der Einwirkungsbereiche (Ei) jeweils teilweise enthalten ist, dem jeweiligen Volumenelement (11) mindestens eine der folgenden Größen zugeordnet wird:
-- die resultierende Prozessgröße (Pi) desjenigen Einwirkungsbereichs (Ei), bei dem der größte Anteil des jeweiligen Volumenelements (11) beeinflusst wird,
-- die resultierende Prozessgröße (Pi) desjenigen Einwirkungsbereichs (Ei), bei dem das jeweilige Volumenelement (11) erstmals oder letztmals beeinflusst wird,
-- ein gewichteter oder ungewichteter Mittelwert der resultierenden Prozessgrößen (Pi) der Einwirkungsbereiche (Ei), die jeweils teilweise in das jeweilige Volumenelement (11) abgebildet werden, oder
-- die größte oder die kleinste resultierende Prozessgröße (Pi) der Einwirkungsbereiche (Ei), die jeweils teilweise in das jeweilige Volumenelement (11) abgebildet werden.

15. Computerprogramm, das Maschinencode (10) umfasst, der von einer einer Steuereinrichtung (4) einer Werkzeugmaschine zugeordneten Recheneinrichtung (8) unmittelbar abarbeitbar ist, wobei die Abarbeitung des Maschinencodes (10) durch die Recheneinrichtung (8) bewirkt, dass die Recheneinrichtung (8) ein Ermittlungsverfahren nach einem der obigen Ansprüche ausführt.

16. Einer Steuereinrichtung (4) einer Werkzeugmaschine zugeordnete Recheneinrichtung, wobei die Recheneinrichtung mit einem Computerprogramm (9) nach Anspruch 15 programmiert ist, so dass sie im Betrieb ein Ermittlungsverfahren nach einem der Ansprüche 1 bis 14 ausführt.

17. Recheneinrichtung nach Anspruch 16,
**dadurch gekennzeichnet,**
**dass** sie mit der Steuereinrichtung (4) der Werkzeugmaschine identisch ist.
